# EUROPÄISCHE PATENTSCHRIFT

(11) **EP 0 665 605 B1**
(45) Veröffentlichungstag und Bekanntmachung des Hinweises auf die Patenterteilung: **29.10.1997**
(21) Anmeldenummer: 94202273.2
(22) Anmeldetag: 08.08.1994
(51) Int. Cl.: H01M 10/48

(54) **Temperatursensor für elektrochemische Akkumulatorenzellen**
Temperature sensor for electrochemical accumulator cells
Capteur de température pour éléments d'accumulateur électrochimique

(30) Priorität: 11.01.1994 DE 4400461
(43) Veröffentlichungstag der Anmeldung: 02.08.1995
(73) Patentinhaber: DETA-Akkumulatorenwerk GmbH, D-37431 Bad Lauterberg im Harz (DE)
(72) Erfinder: Rust, Gustav, D-37444 Sankt Andreasberg (DE); Schindler, Ludwig, D-37444 Sankt Andreasberg (DE)
(74) Vertreter: Ackmann, Günther, Dr.-Ing.

(56) Entgegenhaltungen:
- DE-U- 8 536 390
- DE-U- 8 814 571
- FR-A- 2 652 951
- GB-A- 1 302 204
- PATENT ABSTRACTS OF JAPAN vol. 12 no. 228 (E-627) ,28.Juni 1988 & JP-A-63 019774 (NEC CORP)
- PATENT ABSTRACTS OF JAPAN vol. 17 no. 680 (E-1476) ,14.Dezember 1993 & JP-A-05 227674 (HITACHI LTD)
- PATENT ABSTRACTS OF JAPAN vol. 12 no. 228 (E-627) ,28.Juni 1988 & JP-A-63 019774
- PATENT ABSTRACTS OF JAPAN vol. 17 no. 680 (E-1476) ,14.Dezember 1993 & JP-A-05 227674

## Beschreibung

Beim Laden von elektrochemischen Akkumulatoren stellt sich bei vorgegebener Ladespannung ein resultierender Ladestrom temperaturabhängig ein. Ohne Berücksichtigung des Einflusses der Temperatur kann es somit leicht zu Ladefehlern und im Extremfall zu Überhitzung der elektrochemischen Zellen kommen. Um dies zu vermeiden, ist es bekannt, die Ladespannung und den Ladestrom in Abhängigkeit von der Batterietemperatur zu regeln.

Zur Temperaturmessung ist aus der GB-PS 13 02 204 ein Temperatursensor bekannt, der in einer Sackbohrung des Polbolzens einer elektrochemischen Batterie angeordnet ist. Die Sackbohrung führt über die gesamte Länge des Polbolzens bis in die Polbrücke hinein, so daß der darin angeordnete Temperatursensor innerhalb des Batteriegehäuses und sehr nahe an den Elektroden liegt, um die dort entstehenden Temperaturänderungen schnell und genau anzeigen zu können. Ein solcher Temperatursensor ist zwar für Batterietypen mit Polbolzen geeignet, auf welche jeweils eine Kabelanschlußschelle aufsteckbar und verspannbar ist, nicht jedoch für Batterietypen mit Polschrauben, welche zur Befestigung eines Kabelverbinders in den Polbolzen einschraubbar sind (vgl. DE-GM 83 095 438). Anderseits ist aus der JP 3-149768 A2 ein elektrischer Temperatursensor für eine Bleibatterie bekannt, der Bestandteil eines im Gehäusedeckel eingesetzten Entgasungsstopfens ist. Der Temperatursensor befindet sich in einem Schutzrohr, welches den Entgasungsstopfen zentrisch durchragt und in den Batterieinnenraum ragt. Die Vereinigung des Temperatursensors mit einem Entgasungsstopfens beschränkt jedoch die Verwendung auf Batterietypen mit Entgasung. Außerdem ist der Einbau eines in den Batterieinnenraum ragenden Schutzrohres umständlich und aufwendig und hat den weiteren Nachteil, daß es z. B. bei einem zu geringen Elektrolytstand zu Fehlmessungen kommt, die wiederum erhebliche Ladefehler nach sich ziehen können. Zur Temperaturmessung von Batterietypen mit Polschrauben ist lediglich aus der DE 26 46 115 A1 bekannt, außen an einem Polbolzen einen Fahrstoff anzubringen, der im Bereich zwischen der Umgebungstemperatur und einer vorgewählten Arbeitstemperatur seine Farbe o. dgl. ändert. Diese Methode erlaubt jedoch nur die optische Anzeige eines Temperaturwechsels in einem bestimmten Temperaturbereich, nicht jedoch ein Steuern oder Regeln der Ladespannung und/oder des Ladestroms in Abhängigkeit von der Batterietemperatur.

Die Erfindung geht weiterhin von einer aus DE 85 36 390.1 U1 bekannten Sensorvorrichtung aus, die als selbständiges Gerät ausgebildet und z. B. als Temperaturfühler verwendbar ist. Sie besteht aus einem Sensorgehäuse mit einer zylinderförmigen Bohrung, an deren Boden der Sensor angeordnet ist. Der Raum zwischen dem Sensor und der umgebenden Gehäusewand ist mit einer Wärmeleitpaste ausgefüllt. Für elektrochemische Akkumulatoren bzw. Batterien sind solche Sensorvorrichtungen jedoch nicht geeignet.

Ausgehend von dem in der GB-PS 13 02 204 beschriebenen Stand der Technik liegt der Erfindung die Aufgabe zugrunde, einen Temperatursensor der gattungsgemäßen Art für elektrochemische Akkumulatoren bzw. Batterietypen zu entwickeln, die mit Polschrauben ausgerüstet sind, wobei der Temperatursensor eine zuverlässige Temperaturmessung ermöglicht.

Bei der erfindungsgemäßen Ausbildung ist der Temperatursensor in der in den Polbolzen einschraubbaren Polschraube untergebracht, wobei im eingeschraubten Zustand zwischen Polbolzen und Polschraube einerseits und durch die Wärmeleitmasse zwischen Polschraube und Temperatursensor anderseits ein so guter Wärmeübergang erhalten wird, daß der Temperatursensor einen guten repräsentativen Temperaturwert für die Zellen liefert. Dies gilt insbesondere auch für Zellen mit einem festgelegten, gelförmigen Elektrolyten. Der mechanische Aufbau ist besonders einfach und eine Anwendung bei praktisch allen Batterietypen mit Polschrauben möglich. Durch das Verfüllen mit einer Wärmeleitmasse wird der Temperatursensor außerdem in seiner Lage in der Sackbohrung fixiert. Die nach außen ragenden Anschlußdrähte des elektrischen Temperatursensors erlauben eine Anschluß an elektronische Geräte für Regel- und/oder Steuerzwecke.

Zur Abnahme der Meßsignale ist nach einem weiteren Merkmal der Erfindung vorgesehen, daß der Temperatursensor mit einem in der Sackbohrung angeordneten Koaxialstecker verbunden ist. Zum Schutz der Bauteile, aber auch für eine vereinfachte Montage sind der Temperatursensor, die Wärmeleitmasse und der Koaxialstecker in einer zylinderförmigen Schutzhülle angeordnet, mit der sie in die Sackbohrung der Polschraube eingeführt werden können.

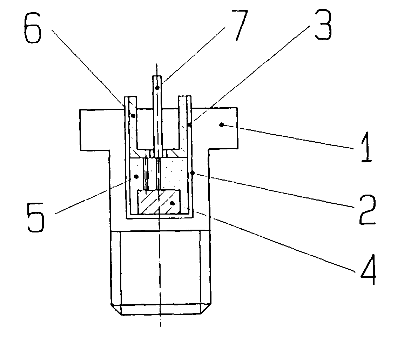

In der Zeichnung ist beispielsweise eine Polschraube 1 dargestellt, die in bekannter Weise in einen Polbolzen einer elektrochemischen Akkumulatorenzelle einschraubbar ist. Diese besitzt eine axiale Sackbohrung 2, deren Wandung und Boden von einer zylinderförmigen Schutzhülle abgedeckt ist. Am Boden der axialen Sackbohrung 2 bzw. der zylinderförmigen Schutzhülle 3 ist ein elektrischer Temperatursensor 4 angeordnet. Dieser besteht beispielsweise aus Platin 100, einem NTC-Sensor oder einem Halbleiterfühler. Er ist derart angeordnet, daß eine gute Wärmeleitung von der Polschraube her sichergestellt ist. zur Verbesserung der Wärmeleitfähigkeit ist die Sackbohrung mit einer Wärmeleitmasse 5 verfüllt, durch welche auch die Anschlußdrähte des Temperatursensors 4 ragen. Weiterhin ist der Temperatursensor 4 mit einem in der Sackbohrung 2 angeordneten Koaxialstecker 6 verbunden, dessen zentrischer Steckstift mit 7 bezeichnet ist. Wie die Zeichnung zu erkennen gibt, sind der Temperatursensor 4, die Wärmeleitmasse 5 und die Koaxialstecker 6 in der zylinderförmigen Schutzhülle 3 angeordnet. Diese besteht vorzugsweise auch aus einem gut wärmeleitfähigen Werkstoff, der jedoch außerdem säurefest sein soll.

### Bezugszeichenliste

- 1: Polschraube
- 2: Sackbohrung
- 3: Schutzhülle
- 4: Temperatursensor
- 5: Wärmeleitmasse
- 6: Koaxialstecker
- 7: Steckstift

## Patentansprüche

1. Temperatursensor für elektrochemische Akkumulatorenzellen, der in einer Sackbohrung eines Pols angeordnet ist, dadurch gekennzeichnet, daß der Temperatursensor (4) in einer axialen Sackbohrung (2) einer in den Polbolzen einschraubbaren Polschraube (1) angeordnet und die Sackbohrung (2) mit einer Wärmeleitmasse (5) verfüllt ist, durch welche die Anschlußdrähte des Temperatursensors (4) nach außen ragen.

2. Temperatursensor nach Anspruch 1, dadurch gekennzeichnet, daß der Temperatursensor (4) mit einem in der Sackbohrung (2) angeordneten Koaxialstecker (6) verbunden ist.

3. Temperatursensor nach Anspruch 1 oder 2, dadurch gekennzeichnet, daß der Temperatursensor (4), die Wärmeleitmasse (5) und der Koaxialstecker (6) in einer zylinderförmigen Schutzhülle (3) angeordnet sind.

## Claims

1. A temperature sensor for electrochemical accumulator cells, the sensor being disposed in a blind bore of a terminal, characterised in that the temperature sensor (4) is disposed in an axial blind bore (2) in a terminal screw (1) screwable into the terminal post and the blind bore (2) is filled with a thermally conductive compound (5) through which the connecting leads of the temperature sensor (4) extend to the exterior.

2. A temperature sensor according to claim 1, characterised in that the temperature sensor (4) is connected to a coaxial plug (6) disposed in the blind bore (2).

3. A temperature sensor according to claim 1 or 2, characterised in that the temperature sensor (4), the thermally conductive compound (5) and the coaxial plug (6) are disposed in a cylindrical protective jacket (3).

## Revendications

1. Capteur de température pour des éléments d'accumulateurs électrochimiques, qui est monté dans un trou borgne d'un pôle, caractérisé en ce que le capteur (4) de température est monté dans un trou (2) axial borgne d'un connecteur (1) vis pouvant être vissé au boulon de pôle et en ce que le trou (2) borgne est rempli d'une composition (5) conductrice de la chaleur, à travers laquelle les fils métalliques de raccordement du capteur (4) de température passent à l'extérieur.

2. Capteur de température suivant la revendication 1, caractérisé en ce que le capteur (4) de température est relié à une fiche (6) coaxiale montée dans le trou (2) borgne.

3. Capteur de température suivant la revendication 1 ou 2, caractérisé en ce que le capteur (4) de température, la composition (5) conductrice de la chaleur et la fiche (6) coaxiale sont disposés dans une enveloppe (3) protectrice cylindrique.
